# EUROPÄISCHE PATENTSCHRIFT

(11) **EP 2 299 565 B1**
(45) Veröffentlichungstag und Bekanntmachung des Hinweises auf die Patenterteilung: **15.08.2012**
(21) Anmeldenummer: 09170558.2
(22) Anmeldetag: 17.09.2009
(51) Int. Cl.: H02K 9/20, H02K 17/16

(54) **Kühlung eines Asynchronläufers**
Cooled rotor of an asynchronous machine
Rotor d`une machine électrique asynchrone avec moyen de refroidissement

(43) Veröffentlichungstag der Anmeldung: 23.03.2011
(73) Patentinhaber: SIEMENS AKTIENGESELLSCHAFT, 80333 München (DE)
(72) Erfinder: Büttner, Klaus, 97618 Hollstadt (DE); Kirchner, Klaus, 97645 Ostheim (DE)

(56) Entgegenhaltungen:
- DE-A1- 2 052 839
- DE-A1- 4 308 683
- JP-A- 1 177 849
- JP-A- 8 205 492
- JP-U- 55 074 271

## Beschreibung

Die Erfindung betrifft einen Käfigläufer für eine Asynchronmaschine, der ein Läuferblechpaket mit stirnseitig an das Läuferblechpaket angegossenen Kurzschlussringen aufweist. Die Erfindung ist im Besonderen mit der Kühlung eines derartigen Käfigläufers befasst.

Darüber hinaus betrifft die Erfindung ein Verfahren zur Herstellung eines derartigen Käfigläufers, bei dem eine entsprechende Kühlung vorgesehen ist.

Um den Wirkungsgrad einer elektrischen Maschine zu erhöhen, werden verschiedene Kühltechniken angewendet, bei denen die im Stator und Rotor entstehende Wärme an die Umgebung abgeführt wird. Die Erwärmung ist im Rotor überwiegend stärker als im Stator. Jedoch ist es schwieriger, die Erwärmung aus einem rotierenden Bauteil, wie es der Rotor darstellt, abzuführen.

Aus der DE 43 08 683 A1 ist ein Käfigläufer für eine Asynchronmaschine bekannt, die in Nuten eines Läuferblechpaketes angeordnete Kurzschlussstäbe aufweist, die an den beiden Stirnseiten des Läuferblechpaketes mit im Aluminiumdruckgussverfahren hergestellten Kurzschlussringen mechanisch und elektrisch leitend verbunden sind.

Aus der JP 1 177849 A ist ein Käfigläufer bekannt, bei dem innerhalb des Läuferblechpaketes Kurzschlussetäbe angeordnet sind, die an den Stirnseiten des Läuferblechpaketes durch Kurzschlussringe elektrisch miteinander verbunden sind. Desweiteren sind Wärmerohre in axialer Richtung in das Läuferblechpaket eingelegt, die an den Stirnseiten aus dem Läuferblechpaket heraus und in die Kurzschlussringe hineinragen.

Eine übliche Methode, Wärme aus einem derartigen Rotor abzuleiten, besteht darin, den Kurzschlussring mit Flügeln auszuführen, um eine Wärmeableitung an den Motorinnenraum zu ermöglichen. Die Effektivität einer solchen Kühlmethode hängt von der Drehzahl des Motors ab. Bei höherpoligen Maschinen wird der Effekt der Wärmeabfuhr durch die Flügel am Kurzschlussring geringer. Die Effektivität eines derartigen Kühlverfahrens sinkt ferner mit der axialen Länge des Rotorblechpaketes, da es hierbei zunehmend schwieriger wird, eine ausreichende Entwärmung über die komplette Rotorpaketlänge zu ermöglichen.

Der Erfindung liegt die Aufgabe zugrunde, die Wärmeabfuhr eines Käfigläufers einer Asynchronmaschine zu verbessern.

Diese Aufgabe wird durch einen Käfigläufer mit den Merkmalen des Patentanspruchs 1 gelöst.

Ferner wird die Aufgabe durch ein Verfahren zur Herstellung eines Käfigläufers für eine Asynchronmaschine mit den Merkmalen des Patentanspruchs 11 gelöst.

Vorteilhafte Ausgestaltungen der Erfindung sind den abhängigen Patentansprüchen zu entnehmen.

Der Erfindung liegt die Erkenntnis zugrunde, dass bei einem Käfigläufer mit stirnseitig angegossenen Kurzschlussringen die besagten Kurzschlussringe hervorragend zur Wärmeabfuhr genutzt werden können, indem diese direkt an die Enden von Wärmerohren angegossen werden. Die Wärmerohre, bei denen es sich um Thermosiphons oder Heatpipes handeln kann, durchdringen das Läuferblechpaket im Wesentlichen axial. Sie transportieren die Wärme, die im Läuferblechpaket entsteht, zu den beiden stirnseitigen Enden des Rotors. An diesen Enden sind sie in die Kurzschlussringe eingegossen, so dass ein nahezu optimaler Wärmeleitübergang von den Wärmerohren auf die Kurzschlussringe ermöglicht wird. Die großflächigen Kurzschlussringe übernehmen die Funktion des Kondensators für die Wärmerohre, so dass auf sehr einfache Art und Weise ein effektiver Wärmekreislauf geschaffen wird.

In vorteilhafter Ausgestaltung der Erfindung wird die Wärmeabfuhr aus dem Rotorblechpaket dadurch weiter verstärkt, dass die Wärmerohre an der dem Läuferblechpaket abgewandten Seite in axialer Richtung aus den Kurzschlussringen herausragen. Der aus den Kurzschlussringen herausragende Teil der Wärmerohre übernimmt hierdurch die Funktion von Lüfterflügeln und unterstützt damit die Konvektion.

Bei der Erfindung sind die Kurzschlussringe aus Aluminium und die Wärmerohre aus Kupfer, wobei auf den Wärmerohren in den Zonen, in den sie innerhalb der Kurzschlussringe angeordnet sind, eine Legierungsschicht ausgebildet ist, die insbesondere galvanisch aufgebracht ist. Kurzschlussringe aus Aluminium haben den Vorteil, dass das Massenträgheitsmoment des Läufers hierdurch im Vergleich zu schwereren Kurzschlussringen aus Kupfer deutlich reduziert werden kann. Weiterhin eignet sich Aluminium hervorragend für ein Gussverfahren aufgrund seines relativ niedrigen Schmelzpunktes. Eine Verwendung von Wärmerohren aus Kupfer hat den Vorteil, dass die Wärmeleitung besonders effektiv ist, da Kupfer einen sehr hohen Wärmeleitwert besitzt. Um nun den Wärmeleitübergang zwischen den Wärmerohren und den Kurzschlussringen zu optimieren, wird in dieser Ausgestaltungsform eine mischkristalline Legierungsschicht auf den Wärmerohren aufgebracht. Eine solche Beschichtung kann galvanisch aufgebracht werden. So kommt eine Galvanisierungsschicht aus Aluminium in Frage. Alternativ ist auch ein Verzinnen der Wärmerohre denkbar, um die gewünschte Reduzierung des Wärmeübergangswiderstandes zu bewirken. Durch die Legierungsschicht wird sowohl die thermische als auch die mechanische Anbindung der Wärmerohre an die Kurzschlussringe verbessert. Ein Abreißen der Wärmerohre von den Kurzschlussringen bedingt durch thermische Lastzyklen im Betrieb der Asynchronmaschine wird effektiv verhindert. Auch der elektrische Übergangswiderstand zwischen den Wärmerohren und den Kurzschlussringen wird reduziert. Dies ist insbesondere dann von Vorteil, wenn die Wärmerohre nicht nur zur Wärmeabfuhr sondern auch zusätzlich als Kurzschlussstäbe in der Asynchronmaschine verwendet werden.

Eine vorteilhafte Ausführungsform der Erfindung ist **dadurch gekennzeichnet, dass** das Läuferblechpaket erste Nuten aufweist, in denen die Kurzschlussstäbe angeordnet sind, und zweite Nuten, in denen die Wärmerohre angeordnet sind. Die zweiten Nuten können vorzugsweise als axiale Bohrungen ausgeprägt sein. In diese werden die Wärmerohre vor dem Angießen der Kurzschlussringe eingeschoben.

Insbesondere dann, wenn jeweils ein Wärmerohr einen höheren elektrischen Widerstand zwischen den Kurzschlussringen aufweist als ein Kurzschlussstab, ist eine Ausgestaltung der Erfindung von Vorteil, bei der die zweiten Nuten gegenüber den ersten Nuten in radialer Richtung des Käfigläufers betrachtet weiter außen angeordnet sind. In einem solchen Fall können die Wärmerohre aufgrund ihres höheren elektrischen Widerstandes als Anlaufstäbe benutzt werden. Anlaufstäbe müssen aufgrund des Skineffekts in radialer Richtung betrachtet weiter außen angeordnet sein als die Betriebsstäbe, um ihren bestimmungsgemäßen Zweck zu erfüllen. Der höhere elektrische Widerstand der Anlaufstäbe bewirkt ein erhöhtes Anlaufmoment der Maschine.

Weist hingegen jeweils ein Wärmerohr eine niedrigeren elektrischen Widerstand zwischen den Kurzschlussringen auf als ein Kurzschlussstab, so ist eine Ausführungsform der Erfindung vorteilhaft, bei der die ersten Nuten gegenüber den zweiten Nuten in radialer Richtung des Käfigläufers betrachtet weiter außen angeordnet sind. Dies kann beispielsweise dann der Fall sein, wenn die Wärmerohre aus Kupfer ausgeführt sind und die Kurzschlussstäbe aus Aluminium. So ist es denkbar, dass in einem Aluminiumdruckgussprozess die ersten Nuten gleichzeitig mit dem Angießen der Kurzschlussringe mit Aluminiumschmelze gefüllt werden. Hierdurch bilden sich in einem Vorgang die Kurzschlussstäbe und die Kurzschlussringe aus. Ein solcher Käfigläufer ist sehr kostengünstig herzustellen.

Die Betriebsstäbe werden hingegen in Form der Wärmerohre aus Kupfer gebildet, deren elektrischer Widerstand vergleichsweise gering ist.

Unabhängig davon, ob die Wärmerohre als Betriebsstäbe oder als Anlaufstäbe verwendet werden, können diese vorteilhafter Weise auch geschrägt ausgeführt werden. Hierbei ist es insbesondere zweckmäßig, auch die Kurzschlussstäbe geschrägt auszugestalten. Ein derartiger Käfigläufer umfasst geschrägte Anlaufstäbe und Betriebsstäbe, wobei eine dieser Stabformen je nach Ausführungsform durch die Wärmerohre gebildet wird. Die Schrägung des Läufers wirkt sich positiv auf das Anlaufverhalten der Asynchronmaschine aus. Pendelmomente, die durch Oberwellen im Luftspaltfeld verursacht werden, werden durch die Schrägung kompensiert.

Eine weitere vorteilhafte Ausführungsform der Erfindung kennzeichnet sich dadurch, dass jeweils eine erste Nut mit jeweils einer zweiten Nut über einen Verbindungssteg zu einer Doppelstabnut miteinander verbunden ist. Wird nun beispielsweise ein Aluminiumdruckgussverfahren angewendet, um die Kurzschlussringe und die Kurzschlussstäbe zu fertigen, so wird zunächst das Wärmerohr in die zweite Nut eingelegt. Anschließend wird das mit den Wärmerohren bestückte Läuferblechpaket in eine Druckgussform gebracht. Dort wird unter Druck die Aluminiumschmelze appliziert, wobei die Schmelze in die ersten Nuten und in die Verbindungsstege eindringt und diese Bereiche füllt. Zeitgleich werden die Kurzschlussringe an die aus dem Läuferblechpaket stirnseitig herausragenden Wärmerohre angegossen.

Ein besonders hoher elektrischer Wirkungsgrad lässt sich in einer hybriden Bauweise in weiterer vorteilhafter Ausgestaltung der Erfindung dadurch gewährleisten, dass die Kurzschlussstäbe aus Kupfer sind und in den ersten Nuten Gussstäbe angeordnet sind, die einen Restquerschnitt füllen, der nicht von den Kurzschlussstäben in den ersten Nuten ausgefüllt wird, wobei die Gussstäbe und die Kurzschlussringe aus Aluminium bestehen. Die Kurzschlussstäbe aus Kupfer erhöhen deutlich den Leitwert und damit den Wirkungsgrad des Käfigläufers. Durch die Aluminiumschmelze, die den Restquerschnitt füllt, werden die Kurzschlussstäbe mechanisch hervorragend innerhalb der Nut fixiert.

Da die Wärmerohre in einem rotierenden Element, dem Käfigläufer, angeordnet sind, müssen diese nicht zwangsläufig eine Kapillareinlage aufweisen, wie sie bei Heatpipes angewendet wird. Eine Kapillare ist nicht erforderlich, da im Betrieb der Asynchronmaschine Fliehkräfte auf das Wärmerohr wirken, wodurch die enthaltene Flüssigkeit nach außen verdrängt wird. Somit kann ein Wärmekreislauf in vorteilhafter Ausgestaltung der Erfindung dadurch realisiert werden, dass die Wärmerohre derart ausgebildet sind, dass ein in einem Wärmerohr eingeschlossenes Medium bei rotierendem Käfigläufer fliehkraftgetrieben zirkulieren kann. Im Läuferblechpaket, dem heißesten Punkt am Wärmerohr, verdampft der Flüssigkeitsfilm, der nach außen gerichtet ist, aufgrund der Fliehkraft. Der Dampf, der hierbei entsteht, wird durch die im Kreislauf nachschiebende Flüssigkeit nach innen verdrängt und bewegt sich mit hoher Geschwindigkeit axial in Richtung des Kurzschlussrings, der hierbei die Aufgabe des Kondensators erfüllt. Hier kommt es schließlich wieder zur Verflüssigung des Dampfes. Das Medium im flüssigen Zustand liegt schließlich fliehkraftbedingt wieder außen am Wärmerohr an.

Kombiniert man einen Käfigläufer gemäß einer der zuvor beschriebenen Ausführungsformen mit einem Stator, so erhält man eine Asynchronmaschine, deren Wirkungsgrad aufgrund der effektiven Kühlung deutlich gegenüber herkömmlichen Asynchronmaschinen mit Käfigläufer verbessert ist.

Im Folgenden wird die Erfindung anhand der in den Figuren dargestellten Ausführungsbeispiele näher beschrieben und erläutert. Es zeigen:
- FIG 1: eine erste Ausführungsform eines Läuferblechpaketes mit Wärmerohren im Querschnitt,
- FIG 2: die erste Ausführungsform in einem radialen Schnitt,
- FIG 3: eine zweite Ausführungsform eines Läuferblechpake- tes mit Wärmerohren im Querschnitt,
- FIG 4: die zweite Ausführungsform in einem radialen Schnitt,
- FIG 5: eine dritte Ausführungsform eines Läuferblechpake- tes mit Wärmerohren,
- FIG 6: eine vierte Ausführungsform eines Läuferblechpake- tes mit Wärmerohren,
- FIG 7: die Funktionsweise eines Wärmerohres und
- FIG 8: eine Asynchronmaschine mit einem Läuferblechpaket gemäß einer Ausgestaltung der Erfindung.

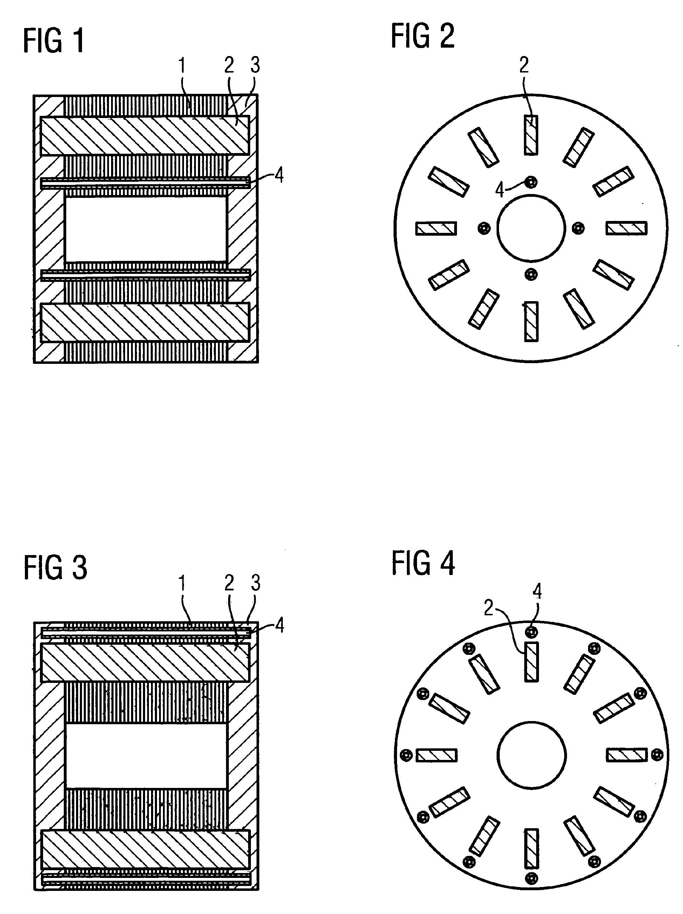

FIG 1 zeigt eine erste Ausführungsform eines Läuferblechpaketes 1 mit Wärmerohren 4 im Querschnitt. Das Läuferblechpaket 1 ist aus axial gestapelten voneinander elektrisch isolierten Elektroblechen aufgebaut. Hierdurch werden Eisen- und Wirbelstromverluste im Läuferblechpaket 1 reduziert.

Ferner umfasst das Läuferblechpaket 1 erste Nuten, in denen Kurzschlussstäbe 2 angeordnet sind. Um einen möglichst hohen elektrischen Wirkungsgrad zu erzielen, sind diese Kurzschlussstäbe 2 aus Kupfer gefertigt.

Ferner umfasst das Läuferblechpaket 1 zweite Nuten in Form von axialen Bohrungen, in denen die Wärmerohre 4 angeordnet sind. In radialer Richtung des Läuferblechpakets 1 betrachtet befinden sich die Wärmerohre 4 und somit die zweiten Nuten weiter innen als die Kurzschlussstäbe 2 bzw. die ersten Nuten.

Bei der Fertigung des hier dargestellten Käfigläufers werden zunächst die Kurzschlussstäbe 2 und die Wärmerohre 4 in die entsprechenden Nuten eingebracht. Anschließend wird das so bestückte Läuferblechpaket in eine Druckgussform gegeben. Hier werden stirnseitig Kurzschlussringe 3 an das Läuferblechpaket 1 angegossen. Die Kurzschlussringe 3 umschließen die stirnseitigen Enden der Kurzschlussstäbe 2 und der Wärmerohre 4. Somit entsteht im Bereich dieser Enden ein hervorragender mechanischer, elektrischer und thermischer Kontakt zwischen den Kurzschlussstäben 2 und den Kurzschlussringen 3 sowie zwischen den Wärmerohren 4 und den Kurzschlussringen 3.

Um die Verbindung zwischen diesen Elementen noch stärker zu gestalten, sind sowohl die Kurzschlussstäbe 2 als auch die Wärmerohre 4 vor dem Einlegen in das Läuferblechpaket 1 beschichtet worden. Hierbei wurde eine Aluminiumschicht auf die Wärmerohre 4 und die Kurzschlussstäbe 2 aufgebracht. Diese Aluminiumschicht muss zumindest in dem Bereich aufgebracht werden, in dem die Kurzschlussstäbe 2 bzw. die Wärmerohre 4 nach dem Druckgussprozess in die Kurzschlussringe 3 hineinragen. Insbesondere durch Galvanisieren dieser Elemente entsteht eine Legierungsschicht zwischen den Kurzschlussstäben 2 und den Kurzschlussringen 3 sowie zwischen den Wärmerohren 4 und den Kurzschlussringen 3. Es bildet sich eine mischkristalline Zone aus, die eine besonders feste mechanische Verbindung herbeiführt. Auch Lastzyklen, die Verspannungen innerhalb des Rotors hervorrufen können, hält diese mischkristalline Verbindung stand.

Der Übergangsleitwert zwischen den Kurzschlussstäben 2 und den Kurzschlussringen 3 bleibt auch nach zahlreichen Zyklen noch sehr gering. Ebenso bleibt der Wärmeübergangsleitwert zwischen den hier beispielhaft aus Kupfer gefertigten Wärmerohren 4 und den Kurzschlussringen 3 äußerst hoch, so dass die Wärme aus den beispielsweise als Thermosiphon ausgebildeten Wärmerohren 4 hervorragend in die Kurzschlussringe 3 abgeführt werden kann. Mit den Kurzschlussringen 3 steht ein großflächiger Kondensator für die Thermosiphons zur Verfügung.

FIG 2 zeigt die erste Ausführungsform in einem radialen Schnitt. Der Schnitt wurde durch einen Kurzschlussring geführt. Die Anzahl der ersten Nuten, die die Kurzschlussstäbe 2 tragen, ist deutlich größer als die Anzahl der zweiten Nuten, die für die Wärmerohre 4 vorgesehen sind. Dies kann selbstverständlich bedarfsabhängig variiert werden. Muss eine höhere Wärmemenge aus dem Rotor abtransportiert werden, so sind mehr als die hier dargestellten vier Wärmerohre 4 vorzusehen. Ebenso ist es denkbar und von der Erfindung umfasst, auch die Wärmerohre 4 als Kurzschlussstäbe für den Asynchronläufer zu verwenden.

So zeigt FIG 3 eine zweite Ausführungsform eines Läuferblechpaketes 1 mit Wärmerohren 4 im Querschnitt. Analog zu der Ausgestaltung gemäß FIG 1 sind auch hier erste Nuten zur Aufnahme von Kurzschlussstäben 2 vorgesehen und zweite Nuten, die als axiale Bohrung ausgeprägt sind, zur Aufnahme der Wärmerohre 4. In diese Ausgestaltungsform sind die zweiten Nuten und damit die Wärmerohre 4 axial betrachtet außen, d.h. in der Nähe des Außenmantels angeordnet. Die Kurzschlussstäbe 2, die auch hier aus Kupfer gefertigt sind, befinden sich in radialer Richtung des Rotors betrachtet innen, d.h. der Rotorwelle zugewandt. In dieser Ausführungsform werden die Wärmerohre 4, die ebenfalls aus Kupfer gefertigt sind, als Anlaufstäbe für den Asynchronläufer verwendet. Ihre Querschnittsfläche ist deutlich kleiner als die der Kurzschlussstäbe 2. Somit ist der elektrische Widerstand, den die Wärmerohre zwischen den beiden Kurzschlussringen bilden deutlich größer als der der Kurzschlussstäbe 2.

Aufgrund des Skineffektes werden während des Anlaufmomentes die Ströme im Rotor zum Außenumfang des Rotors hin, d.h. in Richtung der zweiten Nuten, verdrängt. Sie fließen also in den schlechter leitenden Wärmerohren 4. Dies hat zur Folge, dass das Anlaufverhalten der Asynchronmaschine verbessert wird. Nähert sich der Rotor der Nenndrehzahl, so kommutiert der Stromfluss mehr und mehr auf die deutlich besser leitfähigen Kurzschlussstäbe 2. Hierdurch werden die Läuferverluste reduziert und der elektrische Wirkungsgrad verbessert. Bei dieser Ausgestaltung müssen keine zusätzlichen Anlaufstäbe vorgesehen werden, wie es bei einem Käfigläufer aus dem Stand der Technik häufig zur Verbesserung des Anlaufverhaltens realisiert wird. Die Aufgabe der Anlaufstäbe wird günstigerweise durch die beispielsweise als Thermosiphons ausgeführten Wärmerohre 4 mit übernommen.

FIG 4 zeigt die zweite Ausführungsform in einem radialen Schnitt. Hier ist zu erkennen, dass je Kurzschlussstab 2 ein Wärmerohr 4 vorgesehen ist. Somit ist auch jedem Betriebsstab, der durch die Kurzschlussstäbe 2 gebildet wird, ein Anlaufstab in Form eines Thermosiphons zugeordnet.

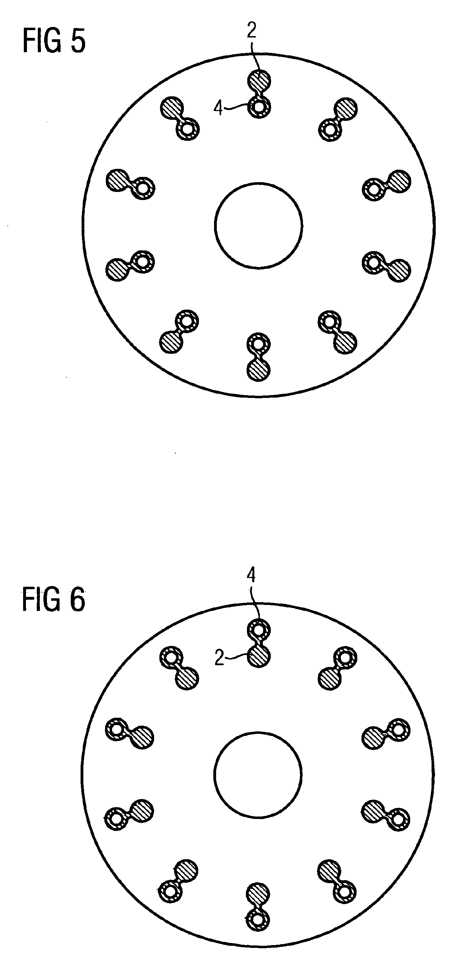

FIG 5 zeigt eine dritte Ausführungsform eines Läuferblechpaketes mit Wärmerohren 4. Hier sind sowohl die Wärmerohre 4 als auch die Kurzschlussstäbe 2 in sogenannten Doppelstabnuten angeordnet. D.h. hierbei ist die erste Nut, die für den Kurzschlussstab 2 vorgesehen ist, über einen dünnen Verbindungssteg mit der zweiten Nut, die für das Wärmerohr 4 vorgesehen ist, verbunden. Die Zeichnung zeigt einen Schnitt durch das Rotorblechpaket und somit durch die Kurzschlussstäbe 2 und die Wärmerohre 4. Die Wärmerohre 4 sind radial betrachtet weiter innen angeordnet als die Kurzschlussstäbe 2. Eine solche Anordnung macht insbesondere dann Sinn, wenn der elektrische Widerstand, den die Wärmerohre 4 zwischen den beiden Kurzschlussringen bilden, kleiner ist als der elektrische Widerstand, den die Kurzschlussstäbe 2 zwischen den beiden Kurzschlussringen bilden.

Im Normalfall wird die Querschnittsfläche der Wärmerohre 4 kleiner sein als die der massiv ausgestalteten Kurzschlussstäbe 2. Werden jedoch Kurzschlussstäbe aus Aluminium, beispielsweise aus einer Aluminiumdruckgussschmelze, verwendet und Wärmerohre 4 aus Kupfer, kann eine derartige Anordnung durchaus sinnvoll sein. Denn bei dieser Materialwahl könnte der elektrische Widerstand der Wärmerohre geringer als der der Kurzschlussstäbe ausfallen. Bei einer solchen Ausgestaltung würde man zur Verbesserung des Anlaufverhaltens die Wärmerohre 4 in radialer Richtung betrachtet näher innen, d.h. in der Nähe der Rotorwelle anordnen. Hier würden die Kurzschlussstäbe 2 aus Aluminium die Funktion der Anlaufstäbe übernehmen.

FIG 6 zeigt eine vierte Ausführungsform eines Läuferblechpaketes mit Wärmerohren 4. Auch hier sind wie in FIG 5 Doppelstabnuten zur Aufnahme der Kurzschlussstäbe 2 und der Wärmerohre 4 vorgesehen. Jedoch befinden sich hier die Kurzschlussstäbe 2 radial betrachtet innen liegend und die Wärmerohre 4 radial betrachtet außen liegend. Diese Anordnung macht Sinn, wenn die Kurzschlussstäbe 2 einen besseren elektrischen Leitwert zwischen den beiden Kurzschlussringen darstellen als die Wärmerohre 4. Dies ist insbesondere dann der Fall, wenn Kurzschlussstäbe 2 und Wärmerohre 4 aus demselben Material, beispielsweise Kupfer oder Aluminium, gefertigt werden. In diesem Fall dienen die Wärmerohre 4 als Anlaufstäbe und die Kurzschlussstäbe 2 als Betriebsstäbe.

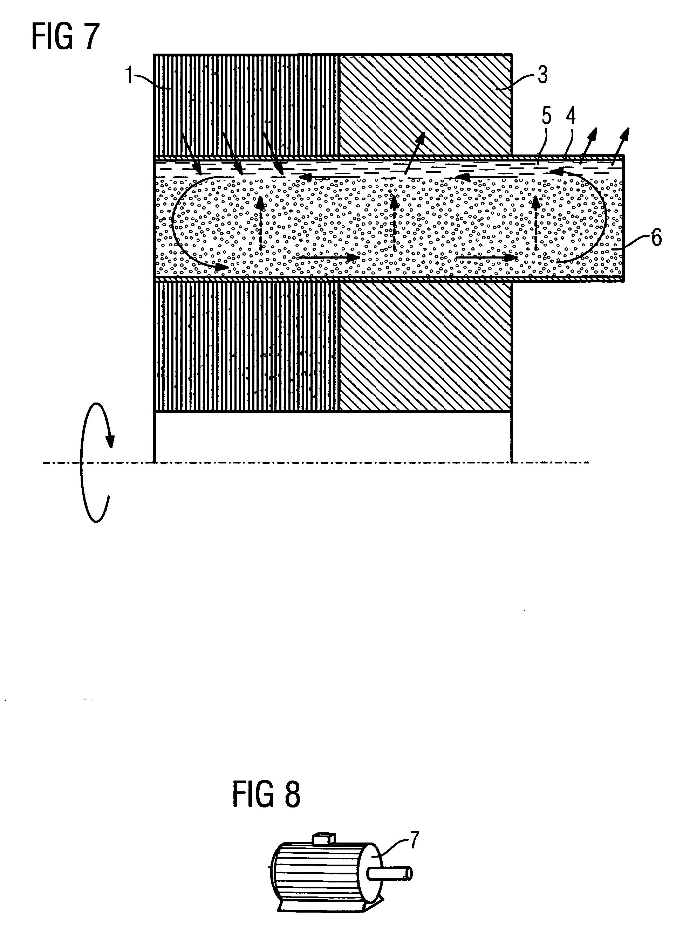

FIG 7 zeigt die Funktionsweise eines Wärmerohres 4 bei einem rotierenden Käfigläufer. Dargestellt ist ein Schnitt durch ein Wärmerohr 4, das Läuferblechpaket 1 und einen Kurzschlussring 3, der stirnseitig an das Läuferblechpaket 1 angegossen wurde. Das Wärmerohr 4 ragt an der dem Läuferblechpaket 1 abgewandten Seite noch aus dem Kurzschlussring 3 heraus. Dieser herausragende Teil des Wärmerohres 4 dient als Lüfterflügel und verbessert somit noch weiter die Luftzirkulation.

Innerhalb des Wärmerohres 4, welches als Thermosiphon ausgeführt ist, befindet sich ein Medium, welches teilweise im flüssigen und teilweise im gasförmigen Zustand ist. Die Flüssigkeit 5 wird durch die von der Rotation des Käfigläufers hervorgerufene Fliehkraft in die Richtung des Umfangs des Käfigläufers gedrängt. Entsprechend befindet sich radial betrachtet innen liegend Dampf 6. Im Rotorpaket, dem heißesten Punkt am Thermosiphon, verdampft der nach außen gerichtete Flüssigkeitsfilm. Der Dampf 6 wird durch die im Kreislauf nachschiebende Flüssigkeit 5 nach innen verdrängt und bewegt sich mit hoher Geschwindigkeit axial in Richtung des Kurzschlussringes 3, der als Kondensator fungiert. Dort kommt es wieder zu einer Verflüssigung des Dampfes 6. Das Medium im flüssigen Zustand liegt schließlich fliehkraftbedingt wieder außen am Thermosiphon an.

FIG 8 zeigt eine Asynchronmaschine 7 mit einem Läuferblechpaket gemäß einer Ausgestaltung der Erfindung. Die Asynchronmaschine 7 zeichnet sich hier durch einen besonders hohen elektrischen Wirkungsgrad aus. Hierbei wird im Gegensatz zu den zuvor beschriebenen Ausführungsformen ein Kupferdruckgussläufer verwendet. Bei der Herstellung dieses Kupferdruckgussläufers wird das Läuferblechpaket zunächst wie bereits im Zusammenhang mit anderen Ausführungsformen beschrieben mit Wärmerohren bestückt. Diese Wärmerohre werden in entsprechende Nuten des Läuferblechpaketes eingelegt. Das so bestückte Läuferblechpaket wird anschließend in eine Druckgussform gegeben. In dieser Druckgussform wird eine Kupferschmelze appliziert, die stirnseitig die Kurzschlussringe bildet und weitere Nuten des Läuferblechpaketes ausfüllt. Nach dem Erhärten der Schmelze entstehen in den weiteren Nuten Kurzschlussstäbe aus Kupfer.

## Patentansprüche

1. Käfigläufer für eine Asynchronmaschine (7), wobei der Käfigläufer
- ein Läuferblechpaket (1),
- innerhalb des Läuferblechpaketes (1) angeordnete Kurzschlussstäbe (2) und
- Kurzschlussringe (3), die die Kurzschlussstäbe (1) an den Stirnseiten des Läuferblechpaketes (1) elektrisch miteinander verbinden,
umfasst, wobei in das Läuferblechpaket (1) in axialer Richtung Wärmerohre (4) eingelegt sind, die an den Stirnseiten aus dem Läuferblechpaket (1) heraus und in die Kurzschlussringe (3) hineinragen, **dadurch gekennzeichnet, dass** die Kurzschlussringe (3) an das Läuferblechpaket (1) angegossen sind, wobei die Kurzschlussringe (3) aus Aluminium und die Wärmerohre (4) aus Kupfer sind, und wobei auf den Wärmerohren (4) in den Zonen, in denen sie innerhalb der Kurzschlussringe (3) angeordnet sind, eine Legierungsschicht ausgebildet ist, die insbesondere galvanisch aufgebracht ist.

2. Käfigläufer nach Anspruch 1,
wobei die Wärmerohre (4) an der dem Läuferblechpaket (1) abgewandten Seite in axialer Richtung aus den Kurzschlussringen (3) herausragen.

3. Käfigläufer nach einem der vorhergehenden Ansprüche,
wobei das Läuferblechpaket (1) erste Nuten aufweist, in denen die Kurzschlussstäbe (2) angeordnet sind, und zweite Nuten, in denen die Wärmerohre (4) angeordnet sind.

4. Käfigläufer nach Anspruch 3,
wobei die zweiten Nuten gegenüber den ersten Nuten in radialer Richtung des Käfigläufers betrachtet weiter außen angeordnet sind und wobei jeweils ein Wärmerohr (4) einen höheren elektrischen Widerstand zwischen den Kurzschlussringen aufweist als ein Kurzschlussstab (2).

5. Käfigläufer nach Anspruch 3,
wobei die ersten Nuten gegenüber den zweiten Nuten in radialer Richtung des Käfigläufers betrachtet weiter außen angeordnet sind und wobei jeweils ein Wärmerohr (4) einen niedrigeren elektrischen Widerstand zwischen den Kurzschlussringen aufweist als ein Kurzschlussstab (2).

6. Käfigläufer nach Anspruch 3, 4 oder 5,
wobei jeweils eine erste Nut mit jeweils einer zweiten Nut über einen Verbindungssteg zu einer Doppelstabnut miteinander verbunden ist.

7. Käfigläufer nach einem der vorhergehenden Ansprüche,
wobei die Kurzschlussstäbe (2) aus Aluminium gegossen sind.

8. Käfigläufer nach einem der Ansprüche Anspruch 3 bis 6,
wobei die Kurzschlussstäbe (2) aus Kupfer sind und in den ersten Nuten Gussstäbe angeordnet sind, die einen Restquerschnitt füllen, der nicht von den Kurzschlussstäben (2) in den ersten Nuten ausgefüllt wird, wobei die Gussstäbe aus Aluminium bestehen.

9. Käfigläufer nach einem der vorhergehenden Ansprüche,
wobei die Wärmerohre (4) derart ausgebildet sind, dass ein in einem Wärmerohr (4) eingeschlossenes Medium bei rotierendem Käfigläufer fliehkraftgetrieben zirkulieren kann.

10. Asynchronmaschine (7) mit einem Stator und einem Käfigläufer ausgebildet nach einem vorhergehenden Ansprüche.

11. Verfahren zur Herstellung eines Käfigläufers für eine Asynchronmaschine (7), bei dem Wärmerohre (4) in Nuten eines Läuferblechpaketes (1) eingelegt werden, **dadurch gekennzeichnet, dass** Kurzschlussringe (3) an die Stirnseiten des Läuferblechpaketes (1) und an die Wärmerohre (4) derart angegossen werden, dass sie Kurzschlussstäbe (2) des Käfigläufers, die innerhalb des Läuferblechpakets (1) angeordnet sind, elektrisch miteinander verbinden und dass die Wärmerohre (4) an den Stirnseiten aus dem Läuferblechpaket (1) heraus und in die Kurzschlussringe (3) hineinragen, wobei die Kurzschlussringe (3) aus Aluminium gegossen werden und die Wärmerohre (4) aus Kupfer sind, und wobei auf den Wärmerohren (4) in den Zonen, in denen sie innerhalb der Kurzschlussringe (3) angeordnet sind, eine Legierungsschicht aufgebracht wird, wobei die Legierungsschicht insbesondere galvanisch aufgebracht wird.

12. Verfahren nach Anspruch 11,
wobei die Wärmerohre (4) derart in das Läuferblechpaket (1) eingelegt werden, dass sie an der dem Läuferblechpaket (1) abgewandten Seite in axialer Richtung aus den Kurzschlussringen (3) herausragen.

13. Verfahren nach einem der Ansprüche 11 oder 12,
wobei die Kurzschlussstäbe (2) aus Aluminium mittels eines Druckgussprozesses gegossen werden.

14. Verfahren nach einem der Ansprüche 11 oder 12, wobei die Kurzschlussstäbe (2) aus Kupfer sind, die Kurzschlussstäbe (2) vor dem Gießen der Kurzschlussringe (3) in weitere Nuten des Läuferblechpaketes (1) eingelegt werden und ein nach dem Einlegen der Kurzschlussstäbe (2) in den weiteren Nuten verbleibender Restquerschnitt beim Gießen der Kurzschlussringe (3) mit der Gussmasse ausgefüllt wird.

## Claims

1. Squirrel cage rotor for an asynchronous machine (7), wherein the squirrel cage rotor comprises
- a laminated rotor core (1),
- shorting bars (2) arranged inside the laminated rotor core (2), and
- shorting rings (3) which connect the shorting bars (2) together electrically at the end faces of the laminated rotor core (1),
wherein heat pipes (4) are inserted in the laminated rotor core (1) in an axial direction, which extend out of the laminated rotor core (1) at the end faces and into the shorting rings (3), **characterised in that** the shorting rings (3) are cast on the laminated rotor core (1), wherein the shorting rings (3) are made of aluminium and the heat pipes (4) are made of copper, and wherein an alloy layer is formed on the heat pipes (4), in particular by electroplating, in those zones in which the heat pipes are arranged inside the shorting rings (3).

2. Squirrel cage rotor according to claim 1,
wherein the heat pipes (4) extend in an axial direction out of the shorting rings (3) on the side that faces away from the laminated rotor core (1).

3. Squirrel cage rotor according to one of the previous claims,
wherein the laminated rotor core (1) comprises first slots, in which the shorting bars (2) are arranged, and second slots, in which the heat pipes (4) are arranged.

4. Squirrel cage rotor according to claim 3,
wherein the second slots are arranged further outwards than the first slots, viewed in the radial direction of the squirrel cage rotor, and wherein a heat pipe (4) in each case has a higher electrical resistance between the shorting rings than a shorting bar (2).

5. Squirrel cage rotor according to claim 3,
wherein the first slots are arranged further outwards than the second slots, viewed in the radial direction of the squirrel cage rotor, and wherein a heat pipe (4) in each case has a lower electrical resistance between the shorting rings than a shorting bar (2).

6. Squirrel cage rotor according to claim 3, 4 or 5,
wherein a first slot is in each case connected to a respective second slot via a connecting bridge to form a double-bar slot.

7. Squirrel cage rotor according to one of the previous claims,
wherein the shorting bars (2) are cast from aluminium.

8. Squirrel cage rotor according to one of claims 3 to 6,
wherein the shorting bars (2) are made of copper, and cast bars are arranged in the first slots, said cast bars filling a residual cross-section that is not filled by the shorting bars (2) in the first slots, wherein the cast bars are made of aluminium.

9. Squirrel cage rotor according to one of the previous claims,
wherein the heat pipes (4) are designed such that a medium enclosed in a heat pipe (4) can circulate under the action of the centrifugal force during rotation of the squirrel cage rotor.

10. Asynchronous machine (7) having a stator and a squirrel cage rotor embodied according to any of the previous claims.

11. Method for producing a squirrel cage rotor for an asynchronous machine (7), in which heat pipes (4) are inserted in slots in a laminated rotor core (1), **characterised in that** shorting rings (3) are cast onto the end faces of the laminated rotor core (1) and onto the heat pipes (4) in such a manner that they electrically connect together shorting bars (2) of the squirrel cage rotor that are arranged inside the laminated rotor core (1), and such that the heat pipes (4) extend out of the laminated rotor core (1) at the end faces and into the shorting rings (3), wherein the shorting rings (3) are cast from aluminium and the heat pipes (4) are made of copper, and wherein an alloy layer is applied to the heat pipes (4), in particular by electroplating, in those zones in which the heat pipes are arranged inside the shorting rings (3).

12. Method according to claim 11,
wherein the heat pipes (4) are inserted in the laminated rotor core (1) in such a manner that they extend axially out of the shorting rings (3) on the side that faces away from the laminated rotor core (1).

13. Method according to one of claims 11 or 12,
wherein the shorting bars (2) are made of aluminium by means of a die-cast process.

14. Method according to one of claims 11 or 12,
wherein the shorting bars (2) are made of copper, the shorting bars (2) are inserted in additional slots of the laminated rotor core (1) before casting the shorting rings (3), and a residual cross-section that remains in the additional slots after inserting the shorting bars (2) is filled with the casting material when casting the shorting rings (3).

## Revendications

1. Rotor à cage pour un moteur ( 7 ) asynchrone, dans lequel le rotor à cage comprend
- un paquet ( 1 ) de tôles rotoriques,
- des barres ( 2 ) de court-circuit, disposées à l'intérieur du paquet ( 1 ) de tôles rotoriques, et
- des anneaux ( 3 ) de court-circuit, qui relient électriquement entre elles les barres ( 1 ) de court-circuit sur les côtés frontaux du paquet ( 1 ) de tôles rotoriques,
dans lequel il est inséré dans le paquet ( 1 ) de tôles rotoriques, dans la direction axiale, des caloducs ( 4 ) qui sortent du paquet ( 1 ) de tôles rotoriques sur les côtés frontaux et pénètrent dans les anneaux ( 3 ) de court-circuit, **caractérisé en ce que** les anneaux ( 3 ) de court-circuit sont coulés sur le paquet ( 1 ) de tôles rotoriques, les anneaux ( 3 ) étant en aluminium et les caloducs ( 4 ) en cuivre et dans lequel sur les caloducs ( 4 ) dans les zones, dans lesquelles ils sont à l'intérieur des anneaux ( 3 ) de court-circuit, est formée une couche d'alliage, qui est déposée notamment galvaniquement.

2. Rotor à cage suivant la revendication 1, dans lequel les caloducs ( 4 ) sortent, du côté éloigné du paquet ( 1 ) de tôles rotoriques, des anneaux ( 3 ) de court-circuit dans la direction axiale.

3. Rotor à cage suivant l'une des revendications précédentes, dans lequel le paquet ( 1 ) de tôles rotoriques comporte des premières encoches dans lesquelles sont disposées les barres ( 2 ) de court-circuit et des deuxièmes encoches dans lesquelles sont disposées les caloducs ( 4 ).

4. Rotor à cage suivant la revendication 3, ans lequel les deuxièmes encoches sont disposées davantage à l'extérieur, considéré dans la direction radiale du rotor à cage, que les premières encoches et dans lequel respectivement un coloduc ( 4 ) a une résistance électrique plus petite entre les anneaux de court-circuit qu'une barre ( 2 ) de court-circuit.

5. Rotor à cage suivant la revendication 3, dans lequel premières encoches sont disposées davantage à l'extérieur, considéré dans la direction radiale du rotor à cage, que les premières encoches et dans lequel respectivement un caloduc ( 4 ) a une résistance électrique plus petite entre les anneaux de court-circuit qu'une barre ( 2 ) de court-circuit.

6. Rotor à cage suivant la revendication 3, 4 ou 5, dans lequel respectivement une première encoche est reliée à respectivement une deuxième encoche en une encoche de barre doubles par une nervure de liaison.

7. Rotor à cage suivant l'une des revendications précédentes, dans lequel les barres ( 2 ) de court-circuit sont coulées en aluminium.

8. Rotor à cage suivant la revendication 3 à 6, dans lequel les barres ( 2 ) de court-circuit sont en cuivre et dans les premières encoches sont disposées des barres coulées, qui remplissent une section transversale restante qui n'est pas remplie par les barres ( 2 ) de court-circuit dans les premières encoches, les barres coulées étant en aluminium.

9. Rotor à cage suivant l'une des revendications précédentes, dans lequel les caloducs ( 4 ) sont tels qu'un milieu enfermé dans un caloduc ( 4 ) peut circuler sous l'effet de la force centrifuge lorsque le rotor à cage tourne.

10. Moteur ( 7 ) asynchrone ayant un stator et un rotor à cage constitué suivant l'une des revendications précédentes.

11. procédé de fabrication d'un rotor à cage pour un moteur ( 7 ) asynchrone, dans lequel on met des caloducs ( 4 ) dans des encoches d'un paquet ( 1 ) de tôles rotoriques, **caractérisé en ce que** l'on coule des anneaux ( 3 ) de court-circuit sur les côtés frontaux du paquet ( 1 ) de tôles rotoriques et sur les caloducs ( 4 ) de manière à ce qu'ils relient électriquement entre elles des barres ( 2 ) de court-circuit du rotor à cage, qui sont disposées à l'intérieur du paquet ( 1 ) de tôles rotoriques et de manière à ce que les caloducs ( 4 ) sortent du paquet ( 1 ) de tôles rotoriques sur les côtés frontaux et pénètrent dans les anneaux ( 3 ) de court-circuit, les anneaux ( 3 ) de court-circuit étant coulés en aluminium et les caloducs étant en cuivre et dans lequel sur les caloducs ( 4 ) dans les zones, dans lesquelles ils sont à l'intérieur des anneaux ( 3 ) de court-circuit, est formée une couche d'alliage, qui est déposée notamment galvaniquement.

12. Procédé suivant la revendication 11,
dans lequel on met les caloducs ( 4 ) dans le paquet ( 1 ) de tôles rotoriques de manière à ce qu'ils fassent saillie, du côté éloigné du paquet ( 1 ) de tôles rotoriques, des anneaux ( 3 ) de court-circuit dans la direction axiale.

13. Procédé suivant l'une des revendications 11 ou 12, dans lequel on coule les barres ( 2 ) de court-circuit en aluminium au moyen d'une opération de coulée sous pression.

14. Procédé suivant l"une des revendications 11 ou 12, dans lequel les barres ( 2 ) de court-circuit sont en cuivre, on met les barres ( 2 ) de court-circuit avant la coulée des anneaux ( 3 ) de court-circuit dans d'autres encoches du paquet ( 1 ) de tôles rotoriques et on remplit de la composition de coulée, lors de la coulée des anneaux ( 3 ) de court-circuit, une section transversale restante qui subsiste dans les autres encoches après avoir mis les barres ( 2 ) de court-circuit.
